# EUROPÄISCHE PATENTSCHRIFT

(11) **EP 3 023 171 B1**
(45) Veröffentlichungstag und Bekanntmachung des Hinweises auf die Patenterteilung: **15.05.2019**
(21) Anmeldenummer: 15194843.7
(22) Anmeldetag: 17.11.2015
(51) Int. Cl.: B21D 53/12, B21D 22/16, F16C 33/38

(54) **DRÜCKWALZEN VON LAGERRINGEN**
FLOW FORMING OF BEARING RINGS
FLUOTOURNAGE DE BAGUES DE PALIER

(30) Priorität: 21.11.2014 DE 102014223824
(43) Veröffentlichungstag der Anmeldung: 25.05.2016
(73) Patentinhaber: Aktiebolaget SKF, 41 550 Göteborg (SE)
(72) Erfinder: Schierling, Jonas, 97437 Hassfurt (DE); Beyfuss, Berthold, 97535 Wasserlosen-Kaisten (DE); Friedrich, Hans-Jürgen, 97486 Königsberg-Römershofen (DE); Gessner, Thomas, Schweinfurt 97421 (DE); Radina, Alfred, 97711 Poppenlauer (DE); Schander, Peter, 97422 Schweinfurt (DE); Schwarm, Günter, 66780 Rehlingen-Siersburg (DE); Voll, Thomas, 97708 Bad Bocklet (DE); Wagner, Gerhard, 97357 Prichsenstadt (DE); Wendt, Klaus, 97247 Eisenheim (DE)
(74) Vertreter: Kuhstrebe, Jochen

(56) Entgegenhaltungen:
- EP-A1- 1 486 269
- WO-A1-2014/035311
- DE-A1-102012 213 033
- JP-A- 2013 193 088
- US-A- 4 114 414

## Beschreibung

Die vorliegende Erfindung betrifft ein Verfahren zur Herstellung eines eine Innenseite und eine Außenseite aufweisenden Lagerrings eines Wälz- oder Gleitlagers mittels Drückwalzen, gemäß dem Oberbegriff des Anspruchs 1 sowie einen mit diesem Verfahren hergestellten Lagerring.

Es ist allgemein bekannt, Lagerringe für Wälz- oder Gleitlager, ausgehend von einem zylinderförmigen Rohling, mit Hilfe eines spanenden Fertigungsverfahrens herzustellen. Dabei werden die Rohlinge mittels Drehen bearbeitet, wobei auf der Innenseite und/oder Außenseite des Lagerrings Späne abgehoben werden. An den Lagerringen können dabei auch Strukturen ausgebildet werden, die zum Beispiel als Schmiermittelnuten dienen oder in denen Dichtungen aufgenommen werden können. Außerdem ist aus der DE-A1-10 2012 213 033 ein Verfahren zur Herstellung eines Lagerringes eines Zylinderrollenlagers durch Fließpressen bekannt.

Nachteilig an dem bisherigen Herstellungsprozess von Lagerringen sind jedoch die vielen Arbeitsschritte und der damit einhergehend hohe Arbeitsaufwand, insbesondere während der Weichbearbeitung, zu denen beispielsweise das Drehen oder Honen zählen. Zudem geht die Bearbeitung mittels Drehen oder Honen mit einem großen Materialverlust einher, wobei das Einbringen von Strukturen in den Lagerring, beispielsweise in Form von Schmiernuten, einen zusätzlichen Materialverlust nach sich zieht. Darüber hinaus müssen für die jeweiligen Arbeitsschritte mehr Maschinen und Werkzeuge bevorratet werden. Dadurch kommt es bei der Produktion von Lagerringen zu erhöhten Kosten.

Aufgabe der vorliegenden Erfindung ist es deshalb, ein kostengünstigeres und vereinfachtes Verfahren für die Herstellung eines eine Struktur aufweisenden Lagerrings bereitzustellen.

Diese Aufgabe wird durch ein Verfahren zur Herstellung eines Lagerrings für ein Wälz- oder Gleitlagers mittels Drückwalzen gemäß Patentanspruch 1 sowie durch einen Lagerring gemäß Patentanspruch 5.

Unter Drückwalzen wird im Rahmen der vorliegenden Erfindung ein Umformen eines Rohlings mittels mindestens einer Umformrolle verstanden, wobei nach dem Zustellen der Umformrolle der Rohling mindestens einmal gegen mindestens eine negativstrukturaufweisende Drückform gedrückt wird.

Mit Hilfe des vorgestellten Verfahrens kann eine Positivstruktur auf der Lagerinnenseite besonders einfach ausgebildet werden, ohne einen Materiaverlust in Kauf nehmen zu müssen. Dabei ist unter der Positivstruktur eine zur Negativstruktur der Drückform komplementäre Struktur zu verstehen, die aus einer Fläche der Lagerinnen- und/oder Lageraußenseite heraussteht oder als Vertiefung in der Fläche eingearbeitet sein kann.

Weiterhin können mit dem vorgestellten Verfahren Arbeitsschritte eingespart werden, so dass das Herstellen des Lagerrings insgesamt kostengünstiger und schneller durchgeführt werden kann. Zudem können Lagerringe mit einer höheren Festigkeit realisiert werden, die aus der Kaltverfestigung der oberflächennahen Lagerringbereiche resultiert, da durch das Drückwalzen, eine Umformung ohne zusätzliche Erwärmung des Rohlings erfolgt. Dadurch kann eine Rissbildung gerade an spannungskonzentrierten Stellen verringert werden, zu denen beispielsweise die Bereiche des Lagerrings zählen, die eine Welle kontaktieren.

Ein weiterer Vorteil des vorgestellten Verfahrens ist die Reduzierung bereitzustellender Werkzeuge und somit auch der Kosten für das Herstellen dieser Werkzeuge.

Wie oben erwähnt, ist die Negativstruktur der Drückform spiralförmig ausgebildet. Mittels des Verfahrens kann so eine zur Negativform komplementäre spiralförmige Struktur in die Innenseite und vorzugsweise auch in die Außenseite des Lagerrings eingebracht werden. Im Anschluss kann der Lagerring in einfacher Handhabung von der Drückform abgeschraubt werden. Durch die spiralförmige Ausgestaltung der Negativstruktur kann zum Beispiel ein Schmiermittelkanal, beispielsweise eine Schmiernut, in relativ einfacher Weise in den Lagerring eingebracht werden, wobei mittels eines spiralförmigen Schmiermittelkanals Schmiermittel in axialer Richtung entlang des Lagerrings "geschraubt" werden.

In einem weiteren bevorzugten Verfahrensschritt kann der drückgewalzte Lagerring zudem mittels mindestens einer Profilierrolle profiliert werden. Dabei kann mindestens eine weitere Struktur auf die Innenseite und/oder die Außenseite des drückgewalzten Lagerrings eingebracht werden. Die Profilierung des drückgewalzten Lagerrings kann dabei in umlaufender, axialer oder radialer Richtung erfolgen. Vorteilhafter Weise verbleibt der drückgewalzte Lagerring bei der Profilierung auf dem gleichen Gerät, das für das Drückwalzen eingesetzt wurde. Mittels des Profilierens können insbesondere auf der der Drückform abgewandten Seite weitere benötigte Einstiche, Nuten oder Fasen in den drückgewalzten Lagerring eingebracht werden.

Ein weiterer Aspekt der Erfindung betrifft einen Lagerring für ein Wälz- oder Gleitlager, der mit dem oben beschriebenen Verfahren hergestellt ist. Der erfindungsgemäße Lagerring weist auf seiner Innenseite mindestens eine Positivstruktur auf, die während des Drückwalzens über die Negativstruktur der Drückform ausgebildet wurde. Solche Lagerringe können beispielsweise Wälzlagerringe, Flanschlager oder Gleitbuchsen umfassen und können in allen Bereichen des Maschinenbaus eingesetzt werden.

Eine Maschine zum Drückwalzen mit mindestens einer Umformrolle und mindestens einer oben beschriebenen Drückform, wobei die mindestens eine Drückform eine Negativstruktur aufweist wird ebenfalls beschrieben, wobei diese Maschine kein Gegenstand der vorliegenden Erfindung ist. Vorteilhafter Weise ist an der Maschine weiterhin mindestens eine Profilierrolle angeordnet, um eine der Drückform abgewandten Seite des Lagerrings zu bearbeiten.

In einer weiteren vorteilhaften Ausführungsform weist die Maschine weiterhin ein Zustellelement mit mindestens einer weiteren Negativstruktur auf. Dadurch kann in dem Rohling, beispielsweise auf einer in axialer Richtung verlaufenden Stirnseite, eine weitere Struktur wie beispielsweise eine Fase ausgeformt werden.

Nachfolgend wird die Erfindung anhand von in den Zeichnungen dargestellten Ausführungsbeispielen näher erläutert. Die Ausführungsbeispiele sind dabei rein exemplarischer Natur und sollen nicht den Schutzbereich der Anmeldung festlegen. Dieser wird allein durch die Patentansprüche definiert.

Es zeigen:
Fig. 1: eine Illustration der Verfahrensschritte eines bevorzugten Ausführungsbeispiels des erfindungsgemäßen Verfahrens
Fig. 2: eine schematische Draufsicht einer Ausführungsform der Drückform
Fig. 3: eine schematische Schnittansicht eines bevorzugten Ausführungsbeispiels des erfindungsgemäßen Lagerrings
Fig. 4: eine schematische Draufsicht auf eine bevorzugte Ausführungsform des Lagerrings
Fig. 5: eine schematische Draufsicht auf eine weitere bevorzugte Ausführungsform des Lagerrings

Im Folgenden werden gleiche oder funktionell gleichwirkende Elemente mit denselben Bezugszeichen gekennzeichnet.

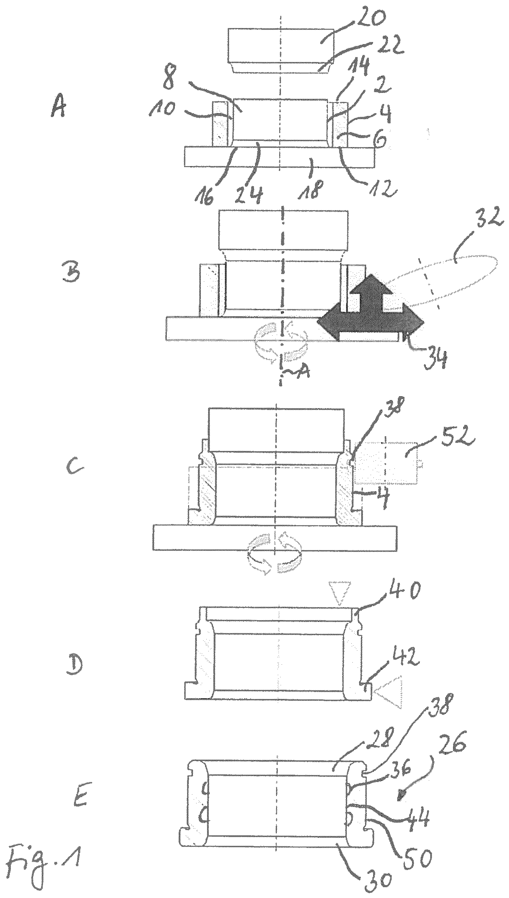

Fig. 1 zeigt schematisch die Verfahrensschritte zur Herstellung eines erfindungsgemäßen Lagerrings 26. Dabei ist in Fig. 1A ein eine Innenseite 2 und eine Außenseite 4 aufweisender Rohling 6 dargestellt, der auf eine Drückform 8 einer nur im Prinzip dargestellten Drückwalzmaschine (nicht gezeigt) eingebracht ist. Bei dem Rohling 6 kann es sich beispielsweise um einen Rohrabschnitt aus Wälzlagerstahl handeln, es kann aber auch eine gelochte Ronde oder ein anderer dem Fachmann bekannter Ausgangsrohling verwendet werden.

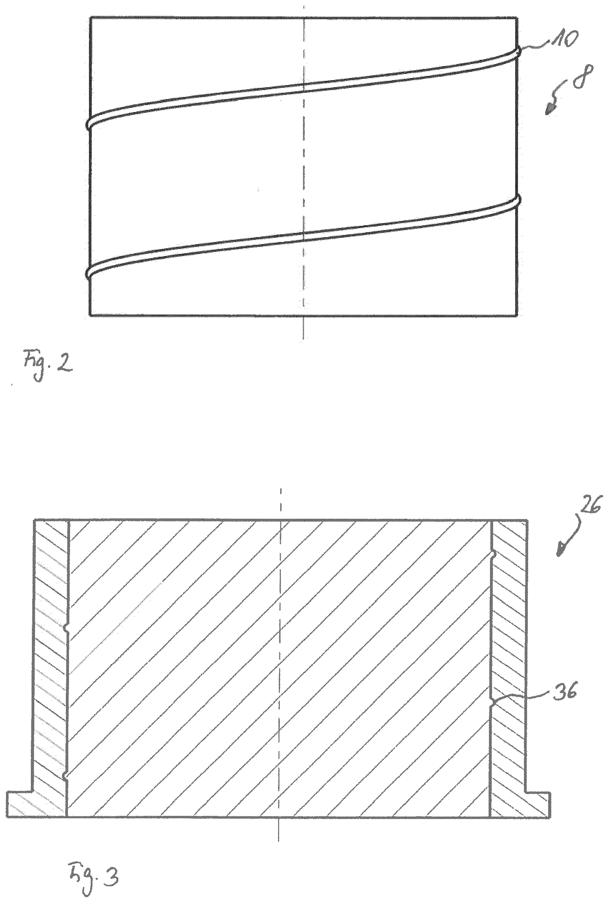

Dabei liegt die Innenseite 2 des Rohlings 6 an der Drückform 8 an. Die Drückform 8 selbst weist mindestens eine Negativstruktur 10 auf, welche die Innenseite 2 des Rohlings 6 direkt kontaktiert. Vergrößert ist die Drückform 8 in Fig. 2 gezeigt, die beispielhaft eine spiralförmige Negativstruktur 10 aufweist.

Der Rohling 6 selbst weist weiterhin eine erste Stirnseite 12 und eine zweite Stirnseite 14 auf, wobei die Stirnseite 12 des Rohlings 6 und eine Stirnseite 16 der Drückform 8 auf einer Auflagefläche 18 der Drückwalzmaschine aufliegen. Die Drückform 8 und die Auflagefläche 18 können dabei auch integral als ein Bestandteil gebildet sein. Um verschiedene Drückformen 8 in der gleichen Maschine zu verwenden, ist jedoch eine austauschbare Drückform 8 bevorzugt.

Weiterhin ist Fig. 1A zu entnehmen, das ein Zustellelement 20 an der Drückwalzmaschine vorgesehen ist. Durch Zustellen des Zustellelements 20 wird die negativstrukturaufweisende Drückform 8 fest gegen die Auflagefläche 18 gedrückt und der Rohling 6 gegen ein mögliches Verrutschen gesichert. Dabei können sowohl an Zustellelement 20 als auch an der Auflagefläche 18 weitere Negativstrukturen 22, 24 ausgebildet sein, die sich in den Stirnseiten 12, 14 des Rohlings 6 abbilden, wodurch an dem fertigen Lagerring 26 (siehe Fig. 1E) Fasen 28, 30 ausgebildet werden können.

Alternativ zu der Darstellung in Fig. 1A und 1B kann der Rohling 6 in axialer Richtung im Vergleich zur Drückform 8 auch kürzer ausgebildet sein und die Auflagefläche 18 nicht kontaktieren.

Fig. 1B zeigt, dass in einem weiteren Verfahrensschritt, der Rohling 6 entlang der Achse A gedreht wird und Umformrollen 32 an den Rohling geführt werden. Des Weiteren deuten die Pfeile 34 in Fig. 1B die Bewegung der Umformrolle 32 an, mit der die Umformung des Rohlings 6 in umfänglicher, axialer und/oder radialer Richtung durch Zustellen der Umformrolle 32 in Richtung des Rohlings 6 erfolgt. Wie oben erwähnt kann der die Drückform 8 kontaktierende Rohling 6 rotieren, während die Umformrolle 32 in ihrer Position fixiert ist. Es ist jedoch auch möglich, lediglich die Umformrolle 32 um den feststehenden Rohling 6 zu drehen. Zudem können sowohl der Rohling 6, als auch die Umformrolle 32 eine gegenläufige Rotation ausführen. Die Umformung selbst erfolgt wie angedeutet dabei durch ein mindestens einmaliges Vorwärts- und/oder Rückwärtswalzen des Rohlings 6. Während des Drückwalzens wird Material an die Drückform 8 und um beziehungsweise in die Negativstruktur 10 gedrückt.

Wie Fig. 1B weiterhin entnehmbar ist, erfolgt die Materialverschiebung nicht nur radial sondern auch nach axial außen in Richtung Zustellelement 20 und entlang der Auflagefläche 18. Dadurch erhält der fertige Lagerring 26 seine typische Form mit einer eingeprägten Innenstruktur 36 und Fasen 28, 30 (siehe Fig. 1E).

In einem weiteren in Fig. 1C optional dargestellten Schritt kann die Außenseite 4 des Rohlings 6 mittels eines sich anschließendes Profilierverfahrens weiter bearbeitet werden, um auch hier eine Struktur auszubilden. Dabei wird die Struktur, wie beispielsweise Einstiche 38 oder Nuten, mittels mindestens einer Profilierrolle 52 in die Außenseite 4 eingebracht.

In einem weiteren in Fig. 1D illustrierten Verfahrensschritt wird nach dem Drückwalzen und dem optionalen Profilierungsschritt der Rohling 6 endbearbeitet, um eventuelle unerwünschte Materialanhäufungen 40, 42 zu beseitigen und eine gleichmäßige Ausgestaltung auszubilden. Zu den endbearbeitenden Arbeitsschritten zählen beispielsweise das Bedrehen, Lasern und Stanzen.

Fig. 1 E zeigt einen mit dem Verfahren hergestellten Lagerring 26 in fertiger Form, mit den ausgeprägten Fasen 28, 30 sowie der an einer Innenseite 44 ausgebildeten Struktur 36.

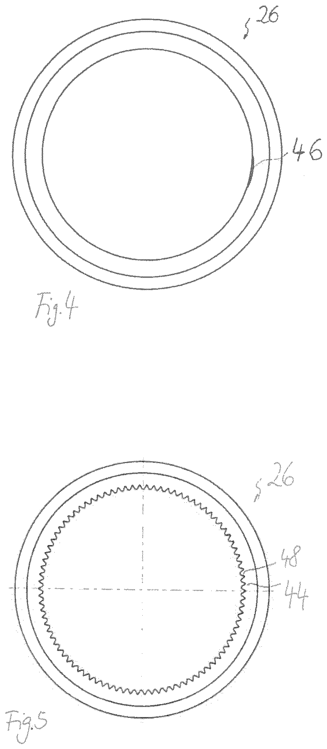

Die so entstandene komplementäre Struktur 36 ist in Fig. 3 gezeigt. Mit Hilfe dieser spiralförmigen Negativstruktur 36 kann beispielsweise ein Schmierkanal in einfacher Verfahrensweise in dem Lagerring 26 ausgeformt werden. Dadurch kann ein Schmiermittel in einfacher Handhabung während der Drehbewegung des Lagerrings in eine Öffnung 46 (siehe Fig. 4) der schraubenförmigen Nut an eine axiale Seite des Lagerrings 26 eingebracht und axial ins Lagerinnere "geschraubt" werden. Das Schmiermittel kann dadurch innerhalb des Lagerrings 26 gezielt bewegt werden.

In Fig. 5 ist ein weiteres Ausführungsbeispiel des erfindungsgemäßen Lagerrings 26 dargestellt. Dabei zeigt Fig. 5, dass nicht nur eine spiralförmige Struktur 36 an der Innenseite 44 des Lagerrings 26 ausgebildet werden kann, sondern dass die Struktur auch als Verzahnung 48 ausgebildet sein kann, mit der der Lagerring 26 beispielsweise drehfest auf einer Welle aufsteckbar ist.

Analog kann das oben beschriebene Verfahren auch dazu verwendet werden, eine Struktur auf einer Außenseite 50 des Lagerrings 26 auszubilden.

Der erfindungsgemäße Lagerring zeichnet sich aufgrund seiner einfachen und kostengünstigen Herstellung aus, wobei mit dem Verfahren gleichzeitig eine Struktur in dem erfindungsgemäßen Lagerring ausformbar ist. Zudem hat sich überraschender Weise gezeigt, dass die oben beschriebenen Umformprozesse auch bei Wälzlagerstahl einsetzbar sind. Dies eröffnet die erfindungsgemäße einfache Ausbildung von Strukturen, insbesondere auf der Innenseite eines Lagerrings, die mit den aus dem Stand der Technik bekannten Verfahren nur sehr mühsam und arbeitsaufwendig ausgebildet werden konnten. Auch aufwendige Strukturen, wie beispielsweise eine Spiralform für einen spiralförmigen Schmiermittelkanal, können nun einfach ausgebildet werden, die mit den aus dem Stand der Technik bekannten Verfahren einer Ausbildung nicht zugänglich waren.

### Bezugszeichen

- 2: Innenseite des Rohlings
- 4: Außenseite des Rohlings
- 6: Rohling
- 8: Drückform
- 10: Negativstruktur der Drückform
- 12, 14: Stirnseite des Rohlings
- 16: Stirnseite der Drückform
- 18: Auflagefläche
- 20: Zustellelement
- 22: Negativstruktur des Zustellelements
- 24: Negativstruktur auf Auflagefläche
- 26: Lagerring
- 28, 30: Fase am Lagerring
- 32: Umformrolle
- 34: Richtung der Umformrolle
- 36: komplementäre Positivstruktur am Lagerring
- 38: Einstich
- 40, 42: Materialanhäufung
- 44: Innenseite des Lagerrings
- 46: Öffnung auf axialer Stirnseite des Lagerrings
- 48: Verzahnung
- 50: Außenseite des Lagerrings
- 52: Profilierrolle

## Patentansprüche

1. Verfahren zur Herstellung eines eine Innenseite (44) und eine Außenseite (50) aufweisenden Lagerrings (26) eines Wälz- oder Gleitlagers mittels Drückwalzen, wobei die Innenseite (44) und/oder die Außenseite (50) des Lagerrings (26) mindestens eine Struktur aufweist, **dadurch gekennzeichnet, dass** das Verfahren folgende Schritte umfasst:
a) Einbringen eines Rohlings (6) aus Wälzlagerstahl auf eine Drückform (8) einer Drückwalzmaschine, so dass eine Innenseite (2) des Rohlings (6) an der Drückform (8) anliegt;
b) Drückwalzen des Rohlings (6) in umlaufender, axialer und/oder radialer Richtung gegen mindestens eine Drückform (8) mittels mindestens einer Umformrolle (32), wobei die mindestens eine Drückform (8) mindestens eine spiralförmige Negativstruktur (10) aufweist;
c) Ausformen einer zur spiralförmigen Negativstruktur (10) der Drückform (8) komplementären spiralförmige Positivstruktur (36) auf der Innenseite (44) des Lagerrings (26) durch Abbilden der spiralförmigen Negativstruktur (10) während des Drückwalzens.

2. Verfahren nach Anspruch 1, **dadurch gekennzeichnet, dass** mindestens eine weitere Struktur mittels mindestens einer Profilierrolle (52) auf die Innenseite (44) und/oder Außenseite (50) des drückgewalzten Lagerrings (26) eingebracht wird.

3. Verfahren nach Anspruch 1 oder 2, wobei das Verfahren weiterhin umfasst, das Ausformen einer zur spiralförmigen Negativstruktur (10) der Drückform (8) komplementären spiralförmige Positivstruktur (36) auf der der Außenseite (50) des Lagerrings (26) durch Abbilden der spiralförmigen Negativstruktur (10) während des Drückwalzens.

4. Verfahren nach einem der vorhergehenden Ansprüche, wobei die Drückform (8) auf einer Auflagefläche (18) der Drückwalzmaschine aufliegt und weiterhin die Drückform (8) mittels eines Zustellelements (20) nach Aufnahme des Rohlings (6) gegen die Auflagefläche (18) gedrückt wird, und so den Rohling (6) gegen ein mögliches Verrutschen sichert.

5. Lagerring (26) eines Wälz- oder Gleitlagers, **dadurch gekennzeichnet, dass** der Lagerring (26) mit einem Verfahren gemäß den Ansprüchen 1 bis 4 hergestellt ist und mindestens eine spiralförmige Positivstruktur auf seiner Innenseite (44) aufweist, die mittels Abbildens der spiralförmigen Negativstruktur der Drückform erzielt ist.

## Claims

1. Method for producing a bearing ring (26), having an inner side (44) and an outer side (50), of an anti-friction or plain bearing by means of flow forming, the inner side (44) and/or the outer side (50) of the bearing ring (26) having at least one structure, **characterized in that** the method comprises the following steps:
a) introduction of a blank (6) made from roller bearing steel onto a flow forming mould of a flow forming machine, with the result that an inner side (2) of the blank (6) bears against the flow forming mould (8);
b) flow forming of the blank (6) in the circumferential, axial and/or radial direction against at least one flow forming mould (8) by means of at least one forming roller (32), the at least one flow forming mould (8) having at least one spiral negative structure (10);
c) forming of a spiral positive structure (36), which is complementary with respect to the spiral negative structure (10) of the flow forming mould (8), on the inner side (44) of the bearing ring (26) by way of replicating of the spiral negative structure (10) during the flow forming.

2. Method according to Claim 1, **characterized in that** at least one further structure is introduced by means of at least one profiling roller (52) onto the inner side (44) and/or outer side (50) of the flow formed bearing ring (26) .

3. Method according to Claim 1 or 2, the method comprising, furthermore, the forming of a spiral positive structure (36), which is complementary with respect to the spiral negative structure (10) of the flow forming mould (8), on the outer side (50) of the bearing ring (26) by way of replicating of the spiral negative structure (10) during the flow forming.

4. Method according to one of the preceding claims, the flow forming mould (8) lying on a contact face (18) of the flow forming machine, and, furthermore, the flow forming mould (8) being pressed against the contact face (18) by means of a feed element (20) after receiving of the blank (6), and thus securing the blank (6) against possible slipping.

5. Bearing ring (26) of an anti-friction or plain bearing, **characterized in that** the bearing ring (26) is produced by means of a method according to Claims 1 to 4, and has at least one spiral positive structure on its inner side (44), which spiral positive structure is achieved by means of replicating of the spiral negative structure of the flow forming mould.

## Revendications

1. Procédé de fabrication d'une bague de palier (26), comportant un côté intérieur (44) et un côté extérieur (50), d'un palier à roulement ou d'un palier lisse au moyen de rouleaux presseurs, le côté intérieur (44) et/ou le côté extérieur (50) de la bague de palier (26) comportant au moins une structure, **caractérisé en ce que** le procédé comprend les étapes suivantes :
a) introduire une ébauche (6) en acier pour palier à roulement sur une matrice à emboutir (8) d'une machine d'emboutissage au tour de manière à appliquer un côté intérieur (2) de l'ébauche (6) sur la matrice d'emboutissage (8) ;
b) emboutir au tour l'ébauche (6) dans au moins une matrice d'emboutissage (8) dans une direction périphérique, axiale et/ou radiale au moyen d'au moins un rouleau de formage (32), l'au moins une matrice d'emboutissage (8) comportant au moins une structure négative en spirale (10) ;
c) former une structure positive en spirale (36), complémentaire de la structure négative en spirale (10) de la matrice d'emboutissage (8), sur le côté intérieur (44) de la bague de palier (26) par formation de la structure négative en spirale (10) pendant l'emboutissage au tour.

2. Procédé selon la revendication 1, **caractérisé en ce qu'**au moins une autre structure est introduite au moyen d'au moins un rouleau profileur (52) sur le côté intérieur (44) et/ou le côté extérieur (50) de la bague de palier (26) emboutie au tour.

3. Procédé selon la revendication 1 ou 2, le procédé comprenant en outre la formation d'une structure positive en spirale (36), complémentaire de la structure négative en spirale (10) de la matrice d'emboutissage (8), sur le côté extérieur (50) de la bague de palier (26) par formation de la structure négative en spirale (10) pendant l'emboutissage au tour.

4. Procédé selon l'une des revendications précédentes, la matrice d'emboutissage (8) venant en appui sur une surface d'appui (18) de la machine d'emboutissage au tour et la matrice d'emboutissage (8) étant en outre pressée, après réception de l'ébauche (6), contre la surface d'appui (18) au moyen d'un élément d'amenée (20) et empêchant ainsi tout glissement éventuel de l'ébauche (6).

5. Bague de palier (26) d'un palier à roulement ou d'un palier lisse, **caractérisée en ce que** la bague de palier (26) est réalisée par un procédé selon les revendications 1 à 4 et comporte sur son côté intérieur (44) au moins une structure positive en spirale qui est obtenue par formation de la structure négative en spirale de la matrice d'emboutissage.
